# EUROPEAN PATENT APPLICATION

(11) **EP 4 848 514 A1**
(43) Date of publication of application: **02.12.2026**
(21) Application number: 25179894.8
(22) Date of filing: 30.05.2025
(51) Int. Cl.: H02J 3/06, H02J 3/08, H02J 3/18, H02J 3/26, H02J 3/32, H02J 3/36

(54) **HYBRID GRID FORMING (GFM) GRID FOLLOWING (GFL) CONTROL VIA A HYBRID TRANSFORMER (HT)**

(71) Applicant: Hitachi Energy Ltd, 8050 Zürich (CH)
(72) Inventor: ALVES, Roberto, 722 14 Västerås (SE); TAYYEBI, Ali, 723 59 Västerås (SE); MOGOROVIC, Marko, 1205 Geneva (CH); KHAN, Akif Zia, 31-416 Kraków (PL); CAL, Jerzy, 94-056 Lodz (PL); ROSSELET, Adrien, 1004 Lausanne (CH)
(74) Representative: Vossius & Partner Patentanwälte Rechtsanwälte mbB

(57) **Abstract**

The disclosure provides a method for controlling a hybrid transformer (HT) comprising an electric line with a plurality of phases, a first transformer connected to the electric line in series, and a converter module connected on a first side to the electric line in shunt, and a second side of the converter module, opposite to the first side, being connected to the first transformer; wherein the converter module comprises a shunt connected converter with an alternating current (AC) side which is the first side of the converter module, and the converter module further comprises a series connected converter with an AC side of the series connected converter which is the second side of the converter module, wherein a direct current (DC) side of the shunt connected converter is connected to a DC side of the series connected converter by a DC link, the method comprising: obtaining: a first voltage of each of the plurality of phases of the electric line at a first point of common coupling (PCC) where the shunt connected converter module is connected to the electric line in shunt, a second voltage of each of the plurality of phases of the electric line at a second PCC, where the first transformer is connected to the electric line, and a first current of each of the plurality of phases of the electric line at the second PCC; obtaining a phase angle and/or a frequency of the electric line from a synchronization loop; determining a (first) ratio for active power between an active grid following, GFL, grid control and an active grid forming, GFM, grid control; determining an active GFL reference point and an active GFM reference point based on the (first) ratio for active power between the active GFL grid control and the active GFM grid control; and controlling, based on the first voltage, the second voltage, the first current, the phase angle and/or the frequency, the active GFL reference point and the active GFM reference point, the shunt connected converter and the series connected converter, one to implement a GFL grid controlling and the other one to implement a GFM grid controlling.

## Description

The present disclosure relates to method for controlling a hybrid transformer (HT) and an HT system.

Driven by the climate change concerns, the power system has been transitioning to net-zero state in recent years. This transition is highlighted by the replacement of synchronous machines by power-electronics-based converters and systems. An indirect implication of removing synchronous machines from the power system is the fact that the hierarchal grid control is changing from a centralized to a distributed configuration. Therefore, not only the generators but also other grid components are expected to provide certain stabilizing services to the grid. In this disclosure, it is focused, inter alia, on a Hybrid Transformer (HT or power-electronics enhanced transformer (PEET)) and highlight a hybrid grid-forming (GFM) and grid-following (GFL) control design for such a system. In this disclosure, it is intended to use HT control degrees of freedom in different configurations of the distribution network for GFM-GFL control as an additional functionality of the device. A hybrid control design of GFM and grid tracking (GFL) is disclosed for HT. The GFL sub controller is particularly relevant for strong (or hard) grid applications, and the GFM sub-controller is relevant for weak (or soft) grid applications. In addition, the GFM sub-controller can enable black start through HT-PEET.

The frequency stability in, especially PE-dominated (power electronic dominated), power grids is jeopardized due to the reduced amount of inertia present in the grid. Grid control is changing from a centralized to a distributed configuration. Therefore, other grid components may provide stabilizing services to the grid. The disclosed frequency control support services via GFL converters and the GFM control of the converters are envisioned to enhance the frequency stability in a (PE-dominated) power grid. In this disclosure, the control degrees of freedom provided by the HT and design a hybrid GFM-GFL control architecture are exploited. The above-mentioned disadvantages are at least partly overcome and/or advantages mentioned herein are at least partly achieved with the features of the independent claims. Dependent claims define preferred embodiments of the present disclosure.

The present disclosure shows a method for controlling a hybrid transformer (HT) and an HT system.

The present disclosure relates to a method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer; wherein the converter module comprises a shunt connected converter with an alternating current (AC) side which is the first side of the converter module, and the converter module further comprises a series connected converter with an AC side of the series connected converter which is the second side of the converter module, wherein a direct current (DC) side of the shunt connected converter is connected to a DC side of the series connected converter by a DC link, the method comprising: obtaining: a first voltage of each of the plurality of phases of the electric line at a first point of common coupling (PCC) where the shunt connected converter module is connected to the electric line in shunt, a second voltage of each of the plurality of phases of the electric line at a second PCC, where the first transformer is connected to the electric line, and a first current of each of the plurality of phases of the electric line at the second PCC; obtaining a phase angle and/or a frequency of the electric line from a synchronization loop; determining a (first) ratio for active power between an active grid following (GFL) grid control and an active grid forming (GFM) grid control; determining an active GFL reference point and an active GFM reference point based on the (first) ratio for active power between the active GFL grid control and the active GFM grid control; and controlling, based on the first voltage, the second voltage, the first current, the phase angle and/or the frequency, the active GFL reference point and the active GFM reference point, the shunt connected converter and the series connected converter, one to implement a GFL grid controlling and the other one to implement a GFM grid controlling.

This method may be employed for grid control via GFL and GFM methods, and for the use of HTs throughout power grids. The proposed method may be used for HT applications in medium voltage (MV), in high voltage (HV) and/or low voltage (LV) applications. The HV/MV/LV application may be that the electric line is in HV/MV/LV, respectively, and/or that the electric line is part of a power grid in HV/MV/LV, respectively. The method can enhance the functionalities of an HT to provide grid control via GFM and GFL methods.

Obtaining the first voltage, second voltage and/or first current may be done by measuring, estimating, calculating and/or receiving. The first current may be calculated by a current at the first PCC and a current injected by the shunt connected converter (possibly via a second transformer, described later). When the first voltage, second voltage and/or first current are measured, corresponding measurement devices may be present at the corresponding first/second PCC. The first voltage, second voltage and/or first current may be time series data.

The first voltage, the second voltage and/or the first current may be data of all phases of the electric line. The first voltage, the second voltage and/or the first current may be data of at least one phase of the electric line. In balanced conditions, data of other phases may be constructed based on single phase data.

The phase angle and/or frequency of the electric line may be measured at the first PCC or the second PCC. The phase angle and/or frequency may be measured for all phases of the electric line. The phase angle and/or frequency may be measured through current or voltage measurements and through additional mathematical computations. The mathematical computations may extract phase and/or frequency information contained in the current or voltage measurements of/via the synchronization loop. The measurement may be a three-phase voltage at the first PCC or the second PCC. The phase angle and/or frequency may be determined based on the first voltage or the second voltage or the first current. Obtaining the phase angle and/or frequency may be done by measuring, estimating, calculating and/or receiving.

The synchronization loop may be a phase locked loop (PLL). The synchronization loop may be comprised and/or utilized by a GFL controller to control the GFL grid controlling by one of the converters.

The (first) ratio for active power may consider the total active power reference for the HT. The total active power reference for the HT can be split into two references, the active GFM reference point for the GFM converter (the one of the shunt connected converter and the series connected converter implementing GFM) and the active GFL reference point for the GFL converter (the one of the shunt connected converter and the series connected converter implementing GFL). These two reference points generated based on the (first) ratio, when summed together, would generate the original total active power reference. The two reference points identify the amount of active power that is exchanged with the grid in GFM and GFL manner, i.e., through GFM and GFL converters within the HT. The ratio may be the first ratio, especially in view of the second ratio introduced below.

The total active power reference for the HT and the (first) ratio may be used to generate two references, the active GFM reference point for the GFM converter (the one of the shunt connected converter and the series connected converter implementing GFM) and the active GFL reference point for the GFL converter (the one of the shunt connected converter and the series connected converter implementing GFL).

The active GFL reference point may be an active power GFL reference point. The active GFM reference point may be an active power GFM reference point.

Controlling the shunt connected converter and the series connected converter may be one converter in a GFL mode based on a GFL control architecture and (the other) one converter in a GFM mode based on a GFM control architecture. Controlling the shunt connected converter and the series connected converter, one to implement a GFL grid controlling and the other one to implement a GFM grid controlling may be one (converter) to implement an active GFL grid controlling and the other (converter) to implement an active GFM grid controlling. Controlling the shunt connected converter and the series connected converter, one to implement a GFL grid controlling and the other one to implement a GFM grid controlling may be controlling them, one to behave as GFL converter and the other one to behave as GFM converter.

Implementing a GFL/GFM grid controlling may be implementing a GFL/GFM controlling strategy and or a GFL/GFM controlling method. This may also apply to the additions "active" and "reactive". In general GFM and GFL are control methods. The converter that is control based on the GFM and GFL control architectures can be called GFM and GFL converters.

The connections mentioned, for example regarding the HT, may each be direct (only conductor and/or node(s) in between) or indirect (further electrical elements are connected in between).

The plurality of phases of the electric line may be three phases or another number of phases. In this disclosure, generally three phases are mentioned. This could be exchanged with another number of phases bigger than one. The first PCC and the second PCC, each, may have three phases. Preferably, one HT may balance all three phases as a three-phase converter.

The HT may be a device connected to the distribution network. In some embodiments, the HT may be connected to two networks, for example, MV and LV networks or HV and LV networks. The HT may contribute to balancing both networks. The HT may contribute to balance electrical quantities in both grids. A network may be the same as a grid.

The first transformer may also be referred to as trimming transformer (TT). The first voltage may be referred to as grid voltage. The second voltage may be referred to as load voltage. The first current may be referred to as load current.

The DC link connecting the DC side of the shunt connected converter to the DC side of the series connected may constitute a back-to-back connection of the shunt connected converter and the series connected converter.

A hybrid control design of GFM and GFL (also called grid tracking) is disclosed for HT. The GFL sub-controller may be particularly relevant for hard grid applications, and the GFM sub-controller may be relevant for soft grid applications. In addition, the GFM sub-controller can enable black start through HT. The disclosed method and device may maximize the inertia support capability, improve frequency support provision on multiple timescales, and enable black-start capability.

Various embodiments may preferably implement the following features.

Preferably, the method further comprises receiving ratio information from another system or another HT or from a global grid controller; wherein the ratio between the GFL grid control and the GFM grid control is determined based on the ratio information.

Receiving ratio information may be receiving the information describing the ratio of GFM and GFL active power references and/or GFM and GFL reactive power references (for reactive (may mean reactive power case) see below) for the converters inside the HT.

The ratio may be the amount of active power that is exchanged with the grid via the GFM converter and GFL converter inside the HT that is controlled according to the received information.

The another system may be a microgrid controller, a RES (renewable energy system) controller, renewable generator, a network controller, a distribution system operator, a transmission system operator or another grid asset from outside the HT system (short: outside).

Preferably, the shunt connected converter is controlled to implement the GFL grid control and the series connected converter is controlled to implement the GFM grid control.

Controlling to implement the GFL grid control may be controlling in a GFL mode via a GFL controller. Controlling to implement the GFM grid control may be controlling in a GFM mode via a GFM controller.

In an alternative, the shunt connected converter is controlled to implement the GFM grid control and the series connected converter is controlled to implement the GFL grid control.

Preferably, the method further comprises: determining a second ratio for reactive power between a reactive GFL grid control and a reactive GFM grid control; determining a reactive GFL reference point and a reactive GFM reference point based on the second ratio for reactive power between the reactive GFL grid control and the reactive GFM grid control; and controlling the shunt connected converter and the series connected converter also based on the reactive GFL reference point and the reactive GFM reference point.

Active and reactive may be adjectives for the power references. The wording may be kept for the GFL and GFM methods for better overview.

Corresponding as for the active power: the second ratio for reactive power may consider the total reactive power reference for the HT. The total reactive power reference for the HT can be split into two references, the reactive GFM reference point for the GFM converter (the one of the shunt connected converter and the series connected converter implementing GFM) and the reactive GFL reference point for the GFL converter (the one of the shunt connected converter and the series connected converter implementing GFL). These two reference points generated based on the second ratio, when summed together, would generate the original total reactive power reference. The two reference points identify the amount of reactive power that is exchanged with the grid in GFM and GFL manner, i.e., through GFM and GFL converters within the HT.

The reactive GFL reference point may be a reactive power GFL reference point. The reactive GFM reference point may be a reactive power GFM reference point.

The second ratio may be the amount of reactive power that is exchanged with the grid via the GFM converter and GFL converter (the shunt connected converter and the series connected converter implementing GFM and GFL) inside the HT that is controlled according to the received information.

Preferably, the second ratio is (also) determined based on the ratio information.

The ratio of GFM and GFM reactive power references may be the same as the ratio of GFM and GFM active power references. The (first) ratio (for active power) may be the same as the second ratio (for reactive power).

Preferably, the phase angle and/or the frequency is obtained based on a voltage of the electric line.

The phase angle and/or frequency may be determined based on the first voltage or the second voltage or the first current.

Preferably, the shunt connected converter is connected to the electric line in shunt by being connected to a second transformer which is connected to the electric line in shunt.

Preferably, the HT further comprises an electric storage system, ESS, connected to the DC link; and the method further comprises, when the shunt connected converter and the series connected converter are controlled to implement GFL grid controlling and the GFM grid controlling, injecting energy from the ESS into the electric line, or absorbing energy from the electric line and storing the energy into the ESS.

The injecting energy from the ESS into the electric line, or absorbing energy from the electric line and storing the energy into the ESS may be injecting at some times and absorbing at other times. In embodiments, injecting and absorbing may not happen at the same time. In some embodiments, there is only injecting and no absorbing. In other embodiments, there is only absorbing and no injecting. Especially injecting may make it possible to black start the AC grid (electric line) to which the HT is connected.

Preferably, the shunt connected converter is connected to the electric line in shunt by being connected to a second transformer which is connected to the electric line in shunt.

In such a case, an injected current is the current output from the second transformer to the electric line. The injected current is influenced by the current and/or voltage provided from the shunt connected converter to the second transformer. The second transformer may be comprised by the HT.

Preferably, a distribution transformer (DT) is connected to the electric line on a side opposite to the first transformer of where the shunt connected converter is connected in shunt.

This may mean that the order of the components along the electric line is: distribution transformer, shunt connection of shunt connected converter, first transformer. The distribution transformer may be not part of the HT.

The present disclosure also relates to a computer program comprising instructions which, when the computer program is executed by a computer, cause the computer to carry out the described method.

The computer program may run on the controller. The controller may be a processor, a computer, a server, and/or a raspberry pi, and/or the like.

The present disclosure also relates to a hybrid transformer (HT) system comprising: an electric line with a plurality of phases; a first transformer connected to the electric line in series; a converter module connected on a first side to the electric line in shunt, and on a second side of the converter module, opposite to the first side, to the first transformer; and a controller; wherein the converter module comprises a shunt connected converter with an alternating current (AC) side which is the first side of the converter module, and the converter module further comprises a series connected converter with an AC side of the series connected converter which is the second side of the converter module, wherein a direct current (DC) side of the shunt connected converter is connected to a DC side of the series connected converter by a DC link; wherein the controller is configured to: obtain a first voltage of each of the plurality of phases of the electric line at a first point of common coupling (first PCC) where the shunt connected converter module is connected to the electric line in shunt, a second voltage of each of the plurality of phases of the electric line at a second point of common coupling (second PCC) where the first transformer is connected to the electric line, and a first current of each of the plurality of phases of the electric line at the second PCC; obtain a phase angle and/or a frequency of the electric line from a synchronization loop; determine a ratio for active power between an active grid following (GFL) grid control and an active grid forming (GFM) grid control; determine an active GFL reference point and an active GFM reference point based on the ratio for active power between the active GFL grid control and the active GFM grid control; and control, based on the first voltage, the second voltage, the first current, the phase angle and/or the frequency, the active GFL reference point and the active GFM reference point, the shunt connected converter and the series connected converter, one to implement the GFL grid controlling and the other one to implement the GFM grid controlling.

The HT may be used for many different purposes including the described control. Therefore, one HT may replace a plurality of other devices. Also, the HT may use a reduced number of modules compared to other solutions.

Preferably, the shunt connected converter is connected to the electric line in shunt by being connected to a second transformer which is connected to the electric line in shunt. The second transformer may be comprised by the HT.

Preferably, a distribution transformer is connected to the electric line on a side opposite to the first transformer of where the shunt connected converter is connected in shunt.

Preferably, the HT system further comprises a DC/DC converter connected to the DC link in series or in shunt. This connection in shunt may be either directly or by the means of a separate DC-DC converter.

Preferably, the HT system further comprises an electric storage system (ESS) connected to the DC link in series or in shunt.

The HT system may be configured to inject or absorb (exchange) energy between the ESS and the electric line, as also explained above. In the case of having an active DC link (ESS or DC grid connected), GFM control may be able to realize a black start behaviour to create a voltage and frequency reference for the LV and MV grids.

Preferably, the ESS comprises at least one of: one or more capacitors, one or more batteries, one or more super caps (supercapacitors), and one or more super batteries.

The disclosed HT systems may be placed throughout a power grid. They may be decentralized balancing means.

Examples, alternatives, advantages and other explanations for some of these aspects are explained at other parts of this disclosure.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1a shows an exemplary HT according to an embodiment of the present disclosure.
Fig. 1b shows another exemplary HT according to an embodiment of the present disclosure.
Fig. 2 shows the HT with a controller according to an embodiment of the present disclosure.
Fig. 3 shows a flowchart of a method applied by the HT and controller, for example as shown in fig. 2, according to an embodiment of the present disclosure.
Fig. 4 shows different embodiments of the present disclosure for the DC link attached between the shunt connected converter and the current connected converter.

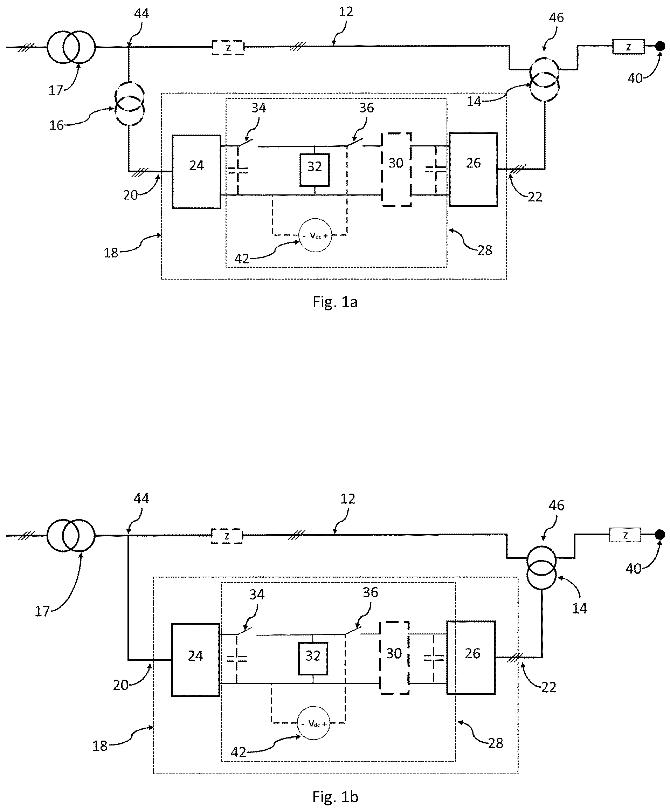

Fig. 1a shows an exemplary HT 10 and a distribution transformer 17. The hybrid transformer (HT) 10 comprises an electric line 12 with a plurality of phases, a first transformer 14 connected to the electric line 12 in series, a second transformer 16, and a converter module 18 connected on a first side 20 to the electric line 12 in shunt and the second transformer 16, and a second side 22 of the converter module 18, opposite to the first side 20, being connected to the first transformer 14.

The converter module 18 comprises a shunt connected converter 24 with an alternating current (AC) side (to the left, towards the second transformer 16) which is the first side 20 of the converter module 18, and the converter module 18 further comprises a series connected converter 26 with an AC side (to the right, towards the first transformer 14) of the series connected converter 26 which is the second side 22 of the converter module 18 , wherein a direct current (DC) side of the shunt connected converter 24 (to the right) is connected to a DC side of the series connected converter 26 (to the left) by a DC link 28.

The DC link 28 comprises a DC/DC converter 30 connected to the DC link in series. In an alternative, the DC/DC converter 30 may be connected in shunt. The DC link 28 further comprises an electric storage system (ESS) 32 connected to the DC link with or without a dedicated DC-DC converter in series or in shunt. The HT 10 further comprises a switch 34 which is connected in the DC link 28 in series. The switch 34 is optional. The switch 34 may be placed at another place in the DC link 28 between the shunt connected converter 24 and the series connected converter 26. The HT 10 further comprises switch 36. The switch 36 is similar to switch 34 optionally placed in the DC link. The DC link 28 may further comprise one or both of capacitors in parallel with the shunt connected converter 24 and the series connected converter 26 on either side of the DC/DC converter 30, respectively.

The electric line 12 has three phases shown by the three diagonal lines in the electric line 12 in this figure. The impedance (z) of the electric line 12 is also shown in this figure as separate part. The electric line 12 extends from the variable transformer 38 (on the left) to the node 40 (on the right). In some embodiments, the electric line may further extend beyond the variable transformer 38 (on the left) and/or beyond the node 40 (on the right). In some embodiments, the electric line 12 may not be regarded as part of the HT 10, but the HT 10 would be (configured to be) connected to the electric line 12. On the other side of the variable transformer 38 as seen from the shunt connection, the variable transformer 38 may be connected to a grid, in this example a MV grid. On the outer side of the node 40, it is connected to another grid, in this example a LV grid. In other examples, the grids may be different, for example, the shown MV grid may be a HV grid, and the shown LV grid may be a MV grid.

The shunt connected converter 24 and the series connected converter 26 may be a different or the same kind of AC/DC converter. Possible products/applications are: statcom (static synchronous compensator), rectifiers, active filters, etc..

The first transformer 14 at the shown position is optional. The second transformer 16 may be omitted. In alternatives, the shunt connected converter 24 may be connected directly to the electric line 12 in shunt. In this figure, the shunt connected converter 24 is connected to the electric line 12 in shunt by being connected to the second transformer 16 which is connected to the electric line 12 in shunt. The distribution transformer 17 is connected to the electric line 12 on a side opposite to the first transformer 14 of where the shunt connected converter 24 is connected in shunt.

The first transformer 14 may be connected to the electric line 12 in series in different ways. In some embodiments, one winding (possibly being three windings due to the plurality of phases) of the first transformer 14 is connected to the electric line 12 in series, such that the one winding could be regarded as part of the electric line 12 just wound. The other winding (possibly being three windings due to the plurality of phases) of the first transformer 14 is at one end connected to the series connected converter 26 and the other end is connected to a node (may be different to node 40; may be a node with no further connections to it) - wherein the node has a plurality (maybe three) ends connected to it due to the plurality of phases.

The first PCC 44 is where the shunt connected converter 24 is connected to the electric line 12 in shunt. The first PCC 44 may be on the electric line 12. The first PCC 44 may be at the point of the shunt connection, or just towards the first transformer 14 (just a little to the right), or just away from the first transformer 14 (just a little to the left). The position of the first PCC 44 (just as for the second PCC 46) may be regarded as identical on any point along an uninterrupted conductor, wherein uninterrupted may mean without other electrical components and without nodes. It is noted that the current and/or voltage values at these different positions of the first PCC 44 can be calculated from each other. For example, the current just right of the position of the shunt connection is equal to the current just left of the shunt connection plus the injection current coming from the shunt connected converter 24/ the second transformer 16 (when present as shown in this figure).

The second PCC 46 is where the first transformer 14 is connected to the electric line 12. The second PCC 46 may be on the electric line 12 just on either side of the first transformer 14.

Corresponding voltage measurement devices and/or current measurement devices may be comprised, at the first PCC 44 and/or the second PCC 46, to measure the first voltage, second voltage and/or first current, respectively.

The HT 10 may further comprise a voltage measurement device 42. The voltage measurement device 42 measures a voltage in the DC link 28, for example of the ESS 32. In some embodiments, the DC link 28 may only be the conductors, without the ESS 32 and DC/DC converter 30.

In some embodiments, the DC-link 28 may be connected to a separate DC grid, i.e., the HT serves as the interface between the AC and DC grids.

The ESS 32 may comprise one or more of the following: one or more capacitors, one or more batteries, one or more super caps, one or more super batteries, and any other energy storage element.

Fig. 1b shows another exemplary HT according to an embodiment of the present disclosure. The HT of fig. 1b is mostly similar to the HT of fig. 1a. For similarities, it is kindly referred to the description of fig. 1a. The HT of fig. 1b is different from the HT of fig. 1a in that there is no second transformer 16. In fig. 1b, the shunt connected converter 24 is directly connected to the electric line 12 in shunt.

In fig. 1a, the shunt connected converter 24 is connected to the electric line 12 in shunt by being connected to the second transformer 16 which is connected to the electric line 12 in shunt.

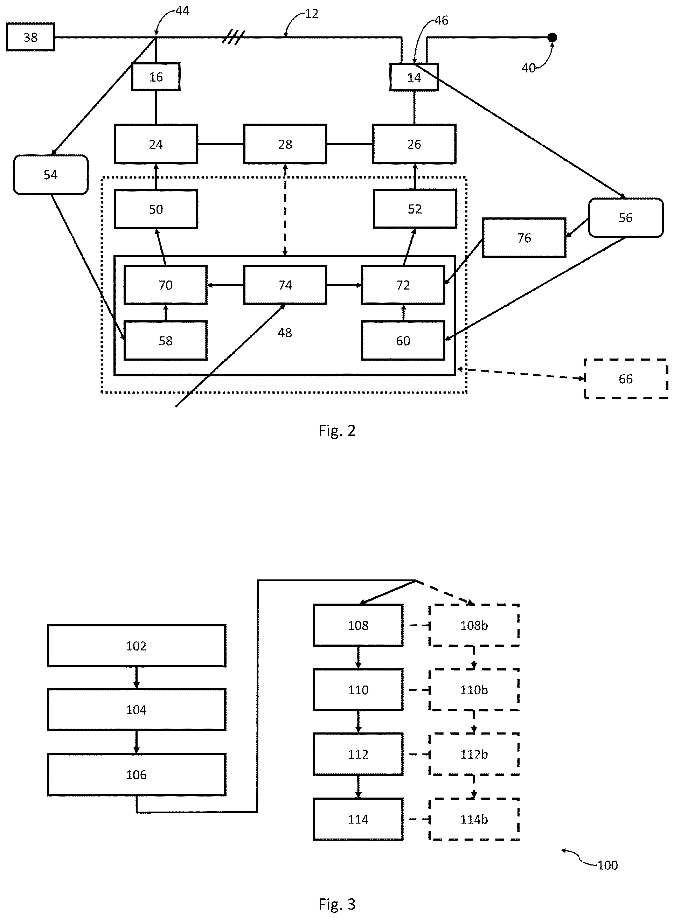

Fig. 2 shows the HT 10 with a controller. Fig. 3 shows a flowchart of a method 100 applied by the HT 10 and a controller, for example as shown in fig. 2.

Fig. 2 shows a simplified drawing of the HT 10 and a controller. The HT 10 may be as described above (also for fig. 1a or fig. 1b). To avoid repetitions, the disclosure from above is herewith included also here (same reference numerals in fig. 2 may indicate the same entities as in figs. 1a and 1b). The controller (shown as dotted line around other entities) comprises a master controller 48, a first low-level controller 50 and a second low-level controller 52. The master controller 48 comprises a GFM controller 70 and a GFL controller 72. The master controller 48 further comprises a coordination controller 74. In some embodiments, the coordination controller 74 may be a more general controller which also provides instructions and/or information, like the active GFL reference point and the active GFM reference point, to the GFM controller 70 and the GFL controller 72.

The master controller 48 may further comprise a central coordination controller (not shown) which coordinates the measurements, the phase angle and/or frequency, processing of these (measurements, the phase angle and/or frequency), and possibly a coordination of these. The coordination controller 74 may be the central coordination controller. Further, first measurements 54 from the first PCC 44 and second measurements 56 form the second PCC 46 are shown. The first measurements 54 may be examples of the first voltage. The second measurements 56 may be examples of the second voltage and/or first current. The master controller 48 comprises two optional FFT (fast Fourier transformation) transforming units 58 and 60. Alternatively, a similar computation method delivering a similar output as FFT, and corresponding units (58 and 60) may be used. In some embodiments the two FFT transforming units 58 and 60 are omitted, and the first measurements 54 are directly fed into GFM controller 70 and the second measurements 56 are directly fed into the GFL controller 72. The master controller 48 may also control the DC link 28. Fig. 2 further shows a high-level controller (e.g. a grid controller 66) to be described below with reference to fig. 3.

Further, a synchronization loop 76 is shown. The synchronization loop 76 receives information from the second measurement 56 and provides a phase angle and/or a frequency to the GFL controller 72. In some alternatives, the synchronization loop 72 receives information from the first measurement 54. In some embodiments, the synchronization loop 76 may additionally or alternatively provide the phase angle and/or frequency to the GFM controller. The synchronization loop 76 may be a phase locked loop (PLL). The synchronization loop 76 may be comprised by the HT.

While fig. 2 shows that the GFM controller 70 instructs the first low-level controller 50 (for the shunt connected converter 24) and the GFL controller 72 instructs the second low-level controller 52 (for the series connected converter 26), this can also be vice versa (meaning that 70 and 72 switch jobs). In some embodiments, the GFM controller 70 and the GFL controller 72 are each capable of instructing both GFM and GFL control, and at some times the GFM controller 70 instructs GFM control and the GFL controller 72 instructs GFL control while at other times the GFM controller 70 instructs GFL and the GFL controller 72 instructs GFM.

Method 100, shown in fig. 3, may be applied by the devices of fig. 2. Method 100 may be used to control the HT system to implement GFM and GFL control. The method 100 may comprise steps 102 to 114, preferably in that order. Method 100 possibly also comprises steps 108b to 114b.

In step 102, the first voltage, the second voltage and/or the first current are measured. Step 102 may also or alternatively be: obtaining: a first voltage of the electric line at a first point of common coupling (PCC) where the shunt connected converter module is connected to the electric line in shunt, a second voltage of the electric line at a second PCC, where the first transformer is connected to the electric line, and/or a first current of the electric line at the second PCC.

In step 104, a phase angle and/or a frequency of the electric line is obtained from the synchronization loop 76.

In step 106, which is optional, ratio information is received from another system or another HT or from a global grid controller (like grid controller 66). The ratio between the GFL grid control and the GFM grid control is determined based on the ratio information. The ratio information is preferably received by the coordination controller 74 from outside. From outside may be from the grid controller 66 or another source (shown by arrow without origin in fig. 2).

In step 108, a ratio for active power between an active GFL grid control and an active GFM grid control is determined. This step is preferably implemented by the coordination controller 74. In alternatives, the ratio can be determined by another system and be sent to the coordination controller 74 (see also step before). The ratio may be in the range of 100% GFM to 100% GFL. Preferably, the sum of the GFM and GFL ratio parts are 100%.

In step 110, an active GFL reference point and an active GFM reference point are determined based on the ratio for active power between the active GFL grid control and the active GFM grid control. This step is preferably implemented by the coordination controller 74. The coordination controller 74 may identify a reference split for the two controllers: GFM controller 70 and GFL controller 72.

In step 112, the active GFM reference point is provided by the coordination controller 74 to the GFM controller 70. The active GFL reference point is provided by the coordination controller 74 to the GFL controller 72.

In step 114, based on the first voltage, the second voltage, the first current, the phase angle and/or the frequency, the active GFL reference point and the active GFM reference point, the shunt connected converter and the series connected converter are controlled, one to implement a GFL grid control and the other one to implement a GFM grid control. The GFM controller 70 may provide appropriate gate signals (possibly in form of voltage and/or current references) to the first low-level controller 50 which controls the shunt connected converter 24 accordingly. The low-level controls may send a modulation signal references to the modulators, and then the modulators may send the gate signals to the converter hardware switches. The GFL controller 72 may provide appropriate gate signals (possibly in form of voltage and/or current references) to the second low-level controller 52 which controls the series connected converter 26 accordingly. Fig. 2 shows a case in which the GFM side (of reference signs 70, 50 and 24) controls based on the first measurements 54 and not on the second measurements 56. Similarly, the GFL side (of reference signs 72, 52 and 26) controls based on the second measurements 56 and not on the first measurements 54. In alternatives, either side may control based on any one or more of the first measurements 54 and second measurements 56.

Optionally in step 114, when the shunt connected converter and the series connected converter are controlled to implement GFL grid control and the GFM grid control, energy is injected from the ESS into the electric line, or energy is absorbed from the electric line and storing the energy into the ESS.

Steps 106 to 114 described above are described for active power control. Simultaneously, reactive power control can be implemented. This is represented by steps 108b to 114b shown in fig. 3, in the dashed parts.

Regarding step 106, which is optional, ratio information received in step 106 also comprises information to determine the second ratio based on the ratio information.

In step 108b, a second ratio for reactive power between a reactive GFL grid control and a reactive GFM grid control is determined. This step is preferably implemented by the coordination controller 74. In alternatives, the second ratio can be determined by another system and be sent to the coordination controller 74 (see also step before). The second ratio may be in the range of 100% GFM to 100% GFL. Preferably, the sum of the reactive GFM and GFL ratio parts are 100%.

In step 110b, a reactive GFL reference point and a reactive GFM reference point are determined based on the second ratio for active power between the reactive GFL grid control and the reactive GFM grid control. This step is preferably implemented by the coordination controller 74. The coordination controller 74 may identify a reference split for the two controllers: GFM controller 70 and GFL controller 72.

In step 112b, the reactive GFM reference point is provided by the coordination controller 74 to the GFM controller 70. The reactive GFL reference point is provided by the coordination controller 74 to the GFL controller 72.

In step 114b, based on the first voltage, the second voltage, the first current, the phase angle and/or the frequency, the reactive GFL reference point and the reactive GFM reference point, the shunt connected converter and the series connected converter are controlled, one to implement a GFL grid control and the other one to implement a GFM grid control.

In embodiments, the shunt connected converter 24 may implement the GFL control (other than GFM described above) and the series connected converter 26 may implement the GFM control (other than the GFL described above). This may be temporal (at times 24 implement GFM and 26 implements GFL, while at other times 24 implements GFL and 26 implements GFM) or permanent. In the cases of this switched implementation (24 implements GFL and 26 implements GFM), the parts 50 and 52, and 70 and 72 may each work in switched manner. Also, the coordination controller 74 may provide the (active and possibly reactive) GFM and GFL reference point to the corresponding other side (GFM reference point to 72 and GFL to 70).

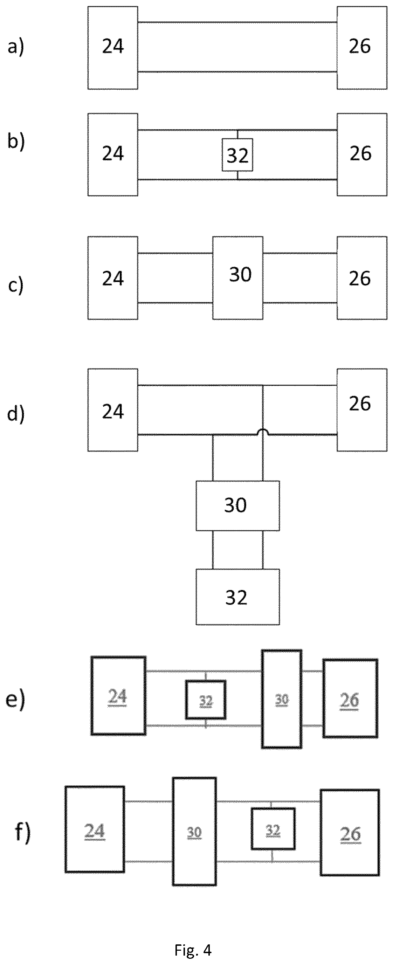

Fig. 4 shows different embodiments for the DC link 28 attached between the shunt connected converter 24 and the current connected converter 26. Any of these embodiments may replace the shown DC links 28 in the HTs 10 disclosed. In embodiment a), the DC link is only the conductors. In embodiment b), an ESS 32 is connected in parallel to the converter. In embodiment c), a DC/DC converter 30 is connected between the converter 24 and 26. In embodiment d), an ESS 32 and a DC/DC converter 30 are connected in shunt to the DC link 28. In embodiments e) and f), an ESS 32 and a DC/DC converter 30 are connected in parallel to the converters; in embodiment e) with the ESS 32 closer to the shunt connected converter 24; and in embodiment f) with the DC/DC converter 30 closer to the shunt connected converter 24.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer;
wherein the converter module comprises a shunt connected converter with an alternating current, AC, side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link, the method comprising:
obtaining:
a first voltage of each of the plurality of phases of the electric line at a first point of common coupling, PCC, where the shunt connected converter module is connected to the electric line in shunt,
a second voltage of each of the plurality of phases of the electric line at a second PCC, where the first transformer is connected to the electric line, and
a first current of each of the plurality of phases of the electric line at the second PCC;
obtaining a phase angle and/or a frequency of the electric line from a synchronization loop;
determining a ratio for active power between an active grid following, GFL, grid control and an active grid forming, GFM, grid control;
determining an active GFL reference point and an active GFM reference point based on the ratio for active power between the active GFL grid control and the active GFM grid control; and
controlling, based on the first voltage, the second voltage, the first current, the phase angle and/or the frequency, the active GFL reference point and the active GFM reference point, the shunt connected converter and the series connected converter, one to implement a GFL grid controlling and the other one to implement a GFM grid controlling.

2. Method of claim 1, the method further comprising receiving ratio information from another system or another HT or from a global grid controller;
wherein the ratio between the GFL grid control and the GFM grid control is determined based on the ratio information.

3. Method of claim 1 or 2, wherein the shunt connected converter is controlled to implement the GFL grid controlling and the series connected converter is controlled to implement the GFM grid controlling.

4. Method of any one of claims 1 to 3, the method further comprises:
determining a second ratio for reactive power between a reactive GFL grid control and a reactive GFM grid control;
determining a reactive GFL reference point and a reactive GFM reference point based on the second ratio for reactive power between the reactive GFL grid control and the reactive GFM grid control; and
controlling the shunt connected converter and the series connected converter also based on the reactive GFL reference point and the reactive GFM reference point.

5. Method of claim 4, when dependent on claim 2, wherein the second ratio is determined based on the ratio information.

6. Method of any one of claims 1 to 4, wherein the phase angle and/or the frequency is obtained based on a voltage of the electric line.

7. Method of any one of claims 1 to 6, wherein the shunt connected converter is connected to the electric line in shunt by being connected to a second transformer which is connected to the electric line in shunt.

8. Method of any one of claims 1 to 7, wherein HT further comprising an electric storage system, ESS, connected to the DC link; and
the method further comprising when the shunt connected converter and the series connected converter are controlled to implement GFL grid controlling and the GFM grid controlling, injecting energy from the ESS into the electric line, or absorbing energy from the electric line and storing the energy into the ESS.

9. A computer program comprising instructions which, when the computer program is executed by a computer, cause the computer to carry out the method of any one of claims 1 to 8.

10. A hybrid transformer, HT, system comprising:
an electric line with a plurality of phases;
a first transformer connected to the electric line in series;
a converter module connected on a first side to the electric line in shunt, and on a second side of the converter module, opposite to the first side, to the first transformer; and
a controller;
wherein the converter module comprises a shunt connected converter with an alternating current, AC; side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link;
wherein the controller is configured to:
obtain
a first voltage of each of the plurality of phases of the electric line at a first point of common coupling, first PCC, where the shunt connected converter module is connected to the electric line in shunt,
a second voltage of each of the plurality of phases of the electric line at a second point of common coupling, second PCC, where the first transformer is connected to the electric line, and
a first current of each of the plurality of phases of the electric line at the second PCC;
obtain a phase angle and/or a frequency of the electric line from a synchronization loop;
determine a ratio for active power between an active grid following, GFL, grid control and an active grid forming, GFM, grid control;
determine an active GFL reference point and an active GFM reference point based on the ratio for active power between the active GFL grid control and the active GFM grid control; and
control, based on the first voltage, the second voltage, the first current, the phase angle and/or the frequency, the active GFL reference point and the active GFM reference point, the shunt connected converter and the series connected converter, one to implement the GFL grid controlling and the other one to implement the GFM grid controlling.

11. HT system of claim 10, wherein the shunt connected converter is connected to the electric line in shunt by being connected to a second transformer which is connected to the electric line in shunt.

12. HT system of any one of claims 10 to 11, further comprising a DC/DC converter connected to the DC link in series or in shunt.

13. HT system of any one of claims 9 to 12, further comprising an electric storage system, ESS, connected to the DC link in series or in shunt.

14. HT system of claim 13, wherein the ESS comprises at least one of: one or more capacitors, one or more batteries, one or more super caps, and one or more super batteries.
